# EUROPÄISCHE PATENTANMELDUNG

(11) **EP 1 959 514 A1**
(43) Veröffentlichungstag der Anmeldung: **20.08.2008**
(21) Anmeldenummer: 07033595.5
(22) Anmeldetag: 27.12.2007
(51) Int. Cl.: H01M 8/00

(54) **Klimaanlage für ein Kraftfahrzeug**

(30) Priorität: 19.02.2007 DE 102007008114
(71) Anmelder: Enerday GmbH, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(57) **Zusammenfassung**

Die Erfindung betrifft eine Klimaanlage (12) für ein Kraftfahrzeug (10), mit einem Brennstoffzellensystem (14) zum Betreiben eines Kältekreises (16).

Vorteilhafterweise ist dabei vorgesehen, dass ein Abgasauslass (54) des Brennstoffzellensystems (14) mit einer Beimischluftführung (96, 98, 100) zusammengeführt wird, wobei in der Beimischluftführung (96, 98, 100) stromaufwärts der Zusammenführstelle ein Kondensator (58) des Kältekreises (16) und/oder eine fluidführende Komponente (18, 20, 22, 24, 26, 28, 38, 42, 44, 46, 48, 50, 52) des Brennstoffzellensystems (14) angeordnet ist.

Darüber hinaus betrifft die Erfindung ein Kraftfahrzeug mit solch einer Klimaanlage und ein Verfahren zum Betreiben solch einer Klimaanlage.

## Beschreibung

Die Erfindung betrifft eine Klimaanlage für ein Kraftfahrzeug, mit einem Brennstoffzellensystem zum Betreiben eines Kältekreises.

Darüber hinaus betrifft die Erfindung ein Kraftfahrzeug mit einer solchen Klimaanlage.

Ferner betrifft die Erfindung ein Verfahren zum Betreiben einer Klimaanlage, welche ein Brennstoffzellensystem zum Betreiben eines Kältekreises aufweist.

Aus der DE 102 23 949 A1 ist eine Standklimaanlage mit einer Brennstoffzelle zur Klimatisierung eines Fahrzeugs bekannt. Das vom Brennstoffzellensystem abgegebene Abgas ist jedoch sehr heiß (ca. 500°C), so dass dieses heiße Abgas eine potentielle Gefahr für die Umwelt, insbesondere in der Nähe leicht entzündbarer Gegenstände, darstellen könnte. Ferner werden auch im Hinblick auf Abgasuntersuchungen die Grenzwerte zunehmend niedriger angesetzt, so dass ständig ein Bedarf an einer Verminderung der Schadstoffkonzentration im Abgas einer solchen Klimaanlage besteht.

Es ist daher die Aufgabe der vorliegenden Erfindung die gattungsgemäße Klimaanlage derart weiterzubilden, dass eine vorteilhaftere Abgasabgabe erreicht werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Klimaanlage baut auf dem gattungsgemä-ßen Stand der Technik dadurch auf, dass ein Abgasauslass des Brennstoffzellensystems mit einer Beimischluftführung zusammengeführt wird, wobei in der Beimischluftführung stromaufwärts der Zusammenführstelle ein Kondensator des Kältekreises und/oder eine fluidführende Komponente des Brennstoffzellensystems angeordnet ist. Dies hat den Vorteil, dass der Luftstrom in der Beimischluftführung die in der Beimischluftführung angeordneten Komponenten kühlt. Trotz dieser Kühlfunktion und der damit verbundenen Aufnahme thermischer Energie ist in jedem Falle die Temperatur der Luft in der Beimischluftführung geringer als die Temperatur der vom Brennstoffzellensystem abgegebenen Abgase. Durch die Zusammenführung der Abgase des Brennstoffzellensystems mit dem Beimischluftstrom kann im Abgasstrom, der von der Klimaanlage an die Umwelt abgegeben wird, eine geringere Temperatur erzielt werden, wodurch die Gefahr für die Umwelt verringert wird. Durch die Beimischung des Beimischluftstroms zu den Abgasen des Brennstoffzellensystems wird die Schadstoffkonzentration der schließlich an die Umwelt abgegebenen Abgase verringert. Die fluidführenden Komponenten sind in Rahmen dieser Erfindung alle Komponenten des Brennstoffzellensystems, die Brennstoff und/oder Oxidationsmittel oder Produkte daraus handhaben - also beispielsweise ein Reformer, eine Brennstoffzelle und ein Nachbrenner - sowie alle Zuleitungen oder Fördereinrichtungen, welche Flüssigkeit (Brennstoff) oder Gas (Oxidationsmittel, Kathodenabluft oder Anodenabluft) führen. Im Zusammenhang mit der Anordnung der fluidführenden Komponenten in der Beimischluftführung hat die vorliegende Erfindung den Vorteil, dass an Leckagen austretende Stoffe oder Gase im Beimischluftstrom mitgerissen werden, so dass sich diese nicht in der Klimaanlage ansammeln können oder an den Bauraum, in dem die Klimaanlage montiert ist, abgegeben werden können. Ferner werden die heißen Brennstoffzellenkomponenten, wie bereits erwähnt, durch den Beimischluftstrom gekühlt. Dieser Beimischluftstrom ist aber trotz dieser Kühlfunktion und der damit verbundenen Wärmeaufnahme kühler als die vom Brennstoffzellensystem abgegebenen Abgase. Im Zusammenhang mit der Anordnung des Kondensators in der Beimischluftführung hat die vorliegende Erfindung den Vorteil, dass die Abwärme des Kondensators abtransportiert wird und nicht zu einer Aufheizung der Klimaanlage oder des Bauraumes, in dem die Klimaanlage montiert ist, führen kann. Die Temperatur des Kondensators von etwa 50°C erwärmt den Beimischluftstrom verglichen mit der Temperatur der Abgase des Brennstoffzellensystems aber nur gering, so dass die Beimischung des Beimischluftstroms zu den Abgasen des Brennstoffzellensystems diese sehr stark abkühlt.

Darüber hinaus ist vorteilhaft, dass die Beimischluftführung dafür ausgelegt ist, ein größeres Gasvolumen zu führen als der Abgasauslass stromaufwärts der Zusammenführstelle. Je größer das Volumen des Beimischluftstroms ist, desto stärker zeigen sich die vorstehend beschriebenen Effekte und Vorteile.

Gemäß einem bevorzugten Ausführungsbeispiel ist vorgesehen, dass die fluidführende Komponente ein Reformer, ein Brennstoffzellenstapel oder ein Nachbrenner ist. Dieses Ausführungsbeispiel bietet den Vorteil, dass diese im Betrieb relativ heißen Komponenten durch den Beimischluftstrom gekühlt werden, aber der Beimischluftstrom trotz der Kühlung dieser Komponenten und der damit verbundenen Wärmeaufnahme immer noch kühler ist als der Abgasstrom und durch die Beimischung zu diesem eine Abkühlung des an die Umwelt abgegebenen Abgasstroms bewirkt wird.

Ferner ist vorteilhafterweise vorgesehen, dass die fluidführende Komponente eine Leitung ist, welche Brennstoff, Oxidationsmittel, Reformat, Kathodenabluft oder Anodenabgas führt. Dies bietet den Vorteil, dass durch eventuelle Leckagen austretende Stoffe oder Gase vom Beimischluftstrom mitgerissen werden.

Mit dem erfindungsgemäßen Kraftfahrzeug und dem erfindungsgemäßen Verfahren können die vorstehend genannten Vorteile in übertragener Weise erreicht werden.

Eine bevorzugte Ausführungsform der Erfindung wird nachfolgend mit Bezug auf die begleitenden Zeichnungen beispielhaft erläutert.

Es zeigen:
- Figur 1: eine schematische Darstellung einer erfindungsgemäßen Klimaanlage;
- Figur 2: eine schematische Darstellung eines Kraftfahrzeugs mit der erfindungsgemäßen Klimaanlage; und
- Figur 3: ein Flussdiagramm eines Klimatisierungsbetriebs der Klimaanlage.

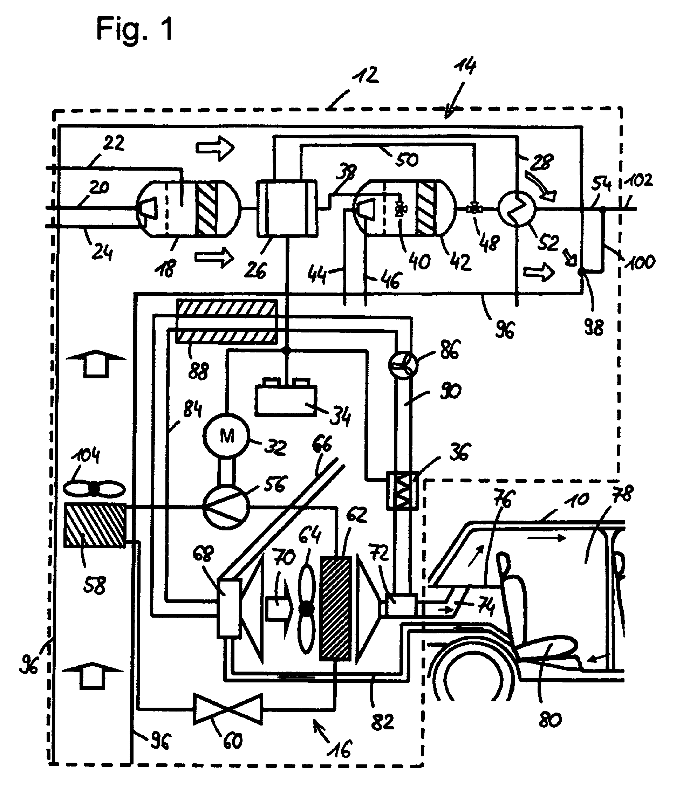

Figur 1 zeigt eine schematische Darstellung einer erfindungsgemäßen Klimaanlage. Die in einem Kraftfahrzeug 10 installierte Klimaanlage 12, die mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Dies kann auf direktem Weg erfolgen oder durch Einspeisung der Energie über einen zentralen Knoten in das elektrische Bordnetz des Kraftfahrzeugs 10. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das Verbrennungsabgas, welches nahezu keine Schadstoffe enthält, durchströmt einen Wärmetauscher 52 zum Vorwärmen der Kathodenzuluft und verlässt schließlich das Brennstoffzellensystem 14 über einen Abgasauslass 54.

In dem Kältekreis 16 sind ein Kompressor 56, ein Kondensator 58, ein Expansionsorgan 60 und ein Verdampfer 62 angeordnet. Der Kompressor 56 ist von dem Elektromotor 32 antreibbar, welcher wiederum vorzugsweise durch den Brennstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden. Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese Weise kann dem Luftstrom 70 durch den Verdampfer 62 Wärmeenergie entzogen werden. Der gekühlte Luftstrom kann dann über eine Stelleinrichtung 72, eine Luftführung 74 und eine Hutablage 76 einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die gekühlte Luft strömt durch den Fahrzeuginnenraum 78 und verlässt diesen unterhalb einer hinteren Sitzbank 80. Anschließend strömt die Luft über eine Luftführung 82 zurück zu der Stelleinrichtung 68, wo sie ganz oder teilweise nach Außen abgeführt wird oder zurück zum Gebläse 64 geleitet wird. Für die Führung der Luft nach Außen ist eine entsprechende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84, welche mit einem Wärmetauscher 88 versehen ist, zugeführt werden. In der Luftführung 84 wird durch ein Gebläse 86 eine Luftströmung erzeugt. Die Wärmeenergie der heißen Teile des Brennstoffzellensystems 14 wird über den Wärmetauscher 88 auf die in der Luftführung 84 strömende Luft übertragen. Die heißen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom in der Luftführung 84 Wärmeenergie zugeführt werden. Der erwärmte Luftstrom führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72 und die Luftführung 74 dem Innenraum 78 zugeführt werden. Nach dem Durchströmen des Innenraums 78 führt der Luftstrom über die Luftführung 82 zur Stelleinrichtung 68, wo er entweder nach Außen abgeführt wird oder zurück zum Wärmetauscher 88 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

Das Brennstoffzellensystem 14, insbesondere der Reformer 18, der Brennstoffzellenstapel 26, der Nachbrenner 42, die Mischeinheit 48 und der Wärmetauscher 52, sowie der Kondensator 58 sind in einem Gehäuse 96 aufgenommen. In diesem Gehäuse 96 wird mittels eines Gebläses 104 ein Luftstrom erzeugt, bei dem Umgebungsluft von Außen angesaugt wird. Dieser Luftstrom umströmt den Kondensator 58 und transportiert gleichzeitig die im Betrieb des Kältekreises 16 am Kondensator 58 entstehende Abwärme ab. Die Temperatur des Kondensators 58 beträgt im Betrieb ungefähr 50°C und der Luftstrom im Gehäuse 96 liegt im Bereich von etwa 200-300 m³/h. Dieser Luftstrom strömt vom Kondensator 58 weiter zu den Komponenten des Brennstoffzellensystems 14 und umströmt sowohl die einzelnen Komponenten, wie den Reformer 18, den Brennstoffzellenstapel 26, den Nachbrenner 42 und den Wärmetauscher 52, als auch deren Zu- und Ableitungen sowie die in den Zu- und Ableitungen angeordneten Fördereinrichtungen, so dass einerseits die Komponenten gekühlt werden, als auch auf Grund von Undichtigkeiten austretende Stoffe im Luftstrom mitgenommen werden. Schließlich verlässt der Luftstrom das Gehäuse 96 über einen Ausgang 98 und wird über eine Beimischleitung 100 mit dem Abgasauslass 54 zusammengeführt. Das Gehäuse 96, der Ausgang 98 und die Beimischleitung 100 bilden somit eine Beimischluftführung aus, die in Figur 1 stark schematisiert dargestellt ist. In der Praxis sind abrupte Querschnittsübergänge möglichst zu vermeiden und strömungstechnische Aspekte zu berücksichtigen, so dass ein entsprechender Volumendurchsatz gewährleistet werden kann. Der Abgasstrom im Abgasauslass 54 hat vor der Beimischung eine Temperatur von etwa 500°C und einen Volumendurchsatz von etwa 50 - 80 m³/h. Nach der Beimischung des Luftstroms aus dem Gehäuse 96 hat der an die Umwelt abgegebene Abgasstrom in dem Abgasauslass, der mit Bezugszeichen 102 gekennzeichnet ist, gemäß der Mischungsregel sowohl eine niedrigere Temperatur als auch eine geringere Schadstoffkonzentration als das Abgas im Abgasauslass 54, d.h. das Abgas des Brennstoffzellensystems 14 vor der Beimischung.

Nachfolgend werden verschiedene Betriebszustände aufgezeigt, die mittels der vorstehend beschriebenen Klimaanlage realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um ein Aufheizen der Klimaanlage 12 und des Bauraumes, in dem die Klimaanlage 12 montiert ist, zu verhindern, wird zum Abführen der Abwärme des Kondensators 58, des Reformers 18, des Brennstoffzellenstapels 26 und des Nachbrenners 42 das Gebläse 104 betrieben, so dass der auf diese Weise erzeugte Beimischluftstrom im Gehäuse 96 die Abwärme über den Abgasauslass 102 zusammen mit den Abgasen des Brennstoffzellensystems 14 abtransportiert.

Kühlbetrieb mit Außenluftzuführung: In diesem Betriebszustand ist die Stelleinrichtung 68 so geschaltet, dass Außenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme des Brennstoffzellensystems 14 und des Kondensators 58 werden die im Rahmen des vorstehend beschriebenen Kühlbetriebs erläuterten Maßnahmen ergriffen.

Heizbetrieb mit Umluftzirkulation: In diesem Betriebszustand wird das Gebläse 86 betrieben, so dass über die Luftführung 82, die Stelleinrichtung 68 und die Luftführung 84 ein Luftstrom aus dem Innenraum 78 zum Wärmetauscher 88 geführt wird. Der Kältekreis 16 ist nicht in Betrieb, d.h. der Elektromotor 32 wird nicht betrieben. Der Luftstrom nimmt über den Wärmetauscher 88 Wärmeenergie von den heißen Teilen des Brennstoffzellensystems 14 auf. Die auf diese Weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78. Um mehr Wärmeenergie von den heißen Teilen des Brennstoffzellensystems 14 auf den Wärmetauscher 88 zu übertragen, kann in diesem Betriebszustand im Unterschied zum beschriebenen Kühlbetrieb das Gebläse 104 mit verminderter Leistung betrieben werden, so dass zwar durch Leckagen austretende Stoffe und Gase im Beimischluftstrom mitgerissen werden, aber auch genügend Abwärme vom Brennstoffzellensystem 14 auf den Wärmetauscher 88 übertragen wird.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystem 14 entstehende Abwärme wird über den Wärmetauscher 88 auf den Luftstrom in der Luftführung 84 übertragen. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird. Auch in diesem Betriebszustand kann, um mehr Wärmeenergie von den heißen Teilen des Brennstoffzellensystems 14 auf den Wärmetauscher 88 zu übertragen, das Gebläse 104 mit verminderter Leistung betrieben werden, wie vorstehend beschrieben.

Diese unterschiedlichen Betriebszustände werden über eine elektronische Steuereinheit angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit ist aus Gründen der Übersichtlichkeit in den Figuren nicht dargestellt, jedoch ist dem Fachmann sofort ersichtlich, dass diese zumindest mit den entsprechenden Fördereinrichtungen in den Strängen 20, 22, 24, 44 und 46 der Energieverteilung in der elektrischen Leitung 30, den Gebläsen 64, 86 und 104, der elektrischen Heizeinrichtung 36, dem Elektromotor 32, den Stelleinrichtungen 68 und 72 sowie den entsprechenden Temperatursensoren verbunden ist.

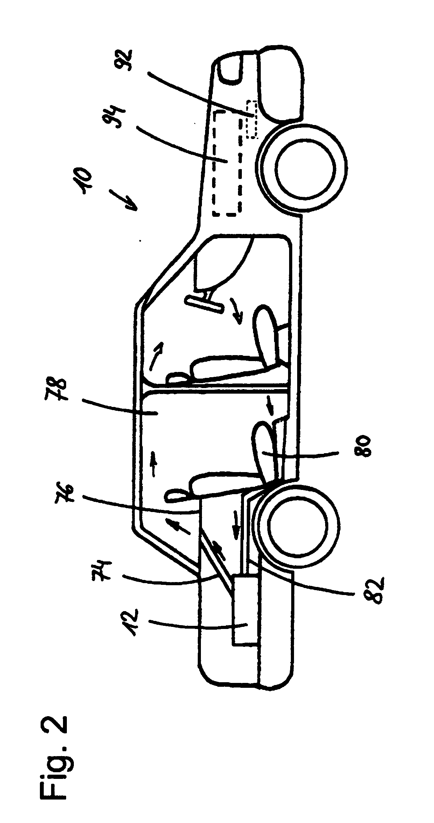

Figur 2 zeigt eine schematische Darstellung des Kraftfahrzeugs 10 mit der erfindungsgemäßen Klimaanlage 12. Die erfindungsgemäße Klimaanlage 12 ist im Kofferraum montierbar, vorzugsweise als nachrüstbare Einheit. Zusätzlich zur beschriebenen Klimaanlage 12 hat das Kraftfahrzeug 10 eine herkömmliche Klimaanlage 92, bei der ein Kompressor eines herkömmlichen Kältekreises mechanisch von einem Antriebsaggregat 94, vorzugsweise einem Verbrennungsmotor, antreibbar ist. Während der Fahrt des Kraftfahrzeugs 10 und dem damit verbundenen Betrieb des Antriebsaggregats 94 kann der Innenraum 78 über die herkömmliche, fahrzeugeigene Klimaanlage 92 in allgemein bekannter Weise gekühlt bzw. mittels Abwärme des Antriebsaggregats 94 erwärmt werden. Bei Stillstand des Antriebsaggregats 94 kann der Innenraum 78 über die erfindungsgemäße Klimaanlage 12 klimatisiert werden.

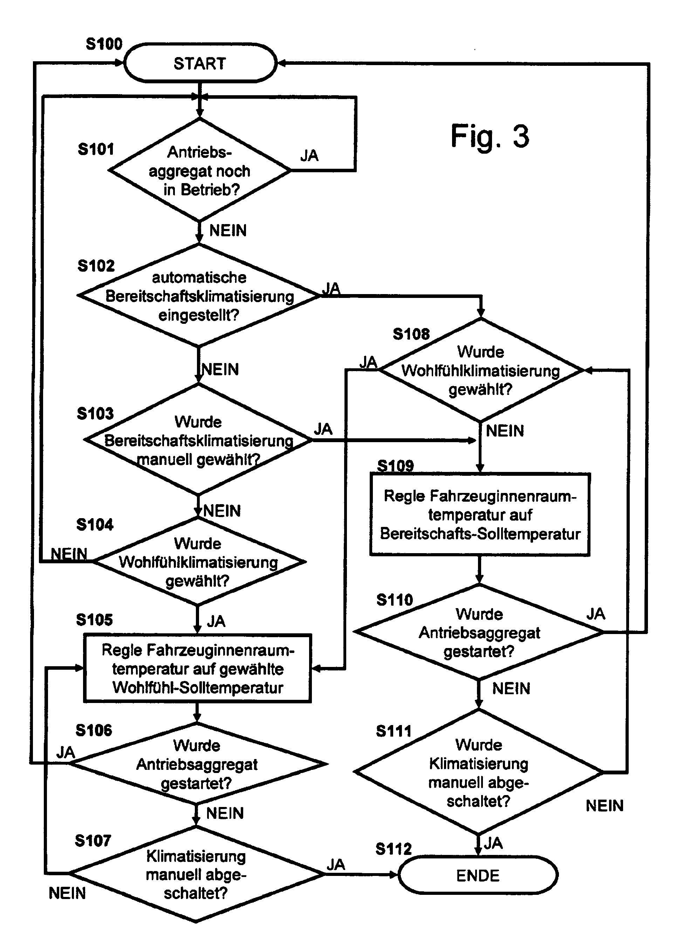

Figur 3 zeigt ein Flussdiagramm des Klimatisierungsbetriebs der erfindungsgemäßen Klimaanlage 12. Die Routine aus Figur 3, welche von der elektronischen Steuereinheit ausgeführt wird, startet bei Schritt S100, wenn die Klimaanlage 12 manuell eingeschaltet wird. Bei Schritt S101 wird bestimmt, ob das Antriebsaggregat 94 immer noch in Betrieb ist. Der Prozess fährt erst dann zu Schritt S102 fort, wenn die Abfrage in Schritt S101 negativ ist. In Schritt S102 wird bestimmt, ob der Benutzter über einen Auswahlschalter oder eine entsprechende Programmierung der Klimaanlage 12 einen automatischen Bereitschaftsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem eine Auswahl aus den verschiedenen Heiz- und Kühlmodi von der elektronischen Steuereinheit getroffen wird. Mit dem nachfolgenden Schritt S106 wird festgelegt, dass diese Wohlfühlklimatisierung automatisch gestoppt wird, wenn das Antriebsaggregat 94 gestartet wird. Wenn in Schritt S106 demnach bestimmt wird, dass das Antriebsaggregat 94 noch nicht läuft, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo die erfindungsgemäße Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit in geeigneter weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob das Antriebsaggregat 94 gestartet wurde. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Klimaanlage 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 76: Hutablage
- 78: Fahrzeuginnenraum
- 80: Sitzbank
- 82: Luftführung
- 84: Luftführung
- 86: Gebläse
- 88: Wärmetauscher
- 90: Luftführung
- 92: Herkömmliche Klimaanlage
- 94: Antriebsaggregat
- 96: Gehäuse
- 98: Ausgang
- 100: Beimischleitung
- 102: Abgasauslass
- 104: Gebläse

## Patentansprüche

1. Klimaanlage (12) für ein Kraftfahrzeug (10), mit einem Brennstoffzellensystem (14) zum Betreiben eines Kältekreises (16), **dadurch gekennzeichnet, dass** ein Abgasauslass (54) des Brennstoffzellensystems (14) mit einer Beimischluftführung (96, 98, 100) zusammengeführt wird, wobei in der Beimischluftführung (96, 98, 100) stromaufwärts der Zusammenführstelle ein Kondensator (58) des Kältekreises (16) und/oder eine fluidführende Komponente (18, 20, 22, 24, 26, 28, 38, 42, 44, 46, 48, 50, 52) des Brennstoffzellensystems (14) angeordnet ist.

2. Klimaanlage (12) gemäß Anspruch 1, **dadurch gekennzeichnet, dass** die Beimischluftführung (96, 98, 100) dafür ausgelegt ist, ein größeres Gasvolumen zu führen als der Abgasauslass (54) stromaufwärts der Zusammenführstelle.

3. Klimaanlage (12) gemäß einem der vorhergehenden Ansprüche, **dadurch gekennzeichnet, dass** die fluidführende Komponente ein Reformer (18), ein Brennstoffzellenstapel (26) oder ein Nachbrenner (42) ist.

4. Klimaanlage (12) gemäß Anspruch 1 oder 2, **dadurch gekennzeichnet, dass** die fluidführende Komponente eine Leitung (20, 22, 24, 28, 38, 44, 46, 50) ist, welche Brennstoff, Oxidationsmittel, Reformat, Kathodenabluft oder Anodenabgas führt.

5. Kraftfahrzeug (10) mit einer Klimaanlage (12) gemäß einem der vorhergehenden Ansprüche.

6. Verfahren zum Betreiben einer Klimaanlage (12), welche ein Brennstoffzellensystem (14) zum Betreiben eines Kältekreises (16) aufweist, **gekennzeichnet durch**
- Erzeugen eines Beimischluftstroms, der einen Kondensator (58) des Kältekreises (16) und/oder eine fluidführende Komponente (18, 20, 22, 24, 26, 28, 38, 42, 44, 46, 48, 50, 52) des Brennstoffzellensystems (14) umströmt;
- Zusammenführen des Abgases des Brennstoffzellensystems (14) mit einem Beimischluftstrom; und
- Abführen des Abgases mit dem Beimischluftstrom als ein gemeinsamer Gasstrom.

7. Verfahren gemäß Anspruch 5, **dadurch gekennzeichnet, dass** der Beimischluftstrom ein größeres Volumen aufweist als der Abgasstrom.
